# EUROPÄISCHE PATENTSCHRIFT

(11) **EP 1 935 227 B1**
(45) Veröffentlichungstag und Bekanntmachung des Hinweises auf die Patenterteilung: **28.04.2010**
(21) Anmeldenummer: 07024757.2
(22) Anmeldetag: 20.12.2007
(51) Int. Cl.: A01D 43/08

(54) **Erntegerät**
Harvesting device
Appareil de récolte

(30) Priorität: 22.12.2006 DE 102006060862
(43) Veröffentlichungstag der Anmeldung: 25.06.2008
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Ester, Markus, Dipl.-Ing., 48480 Lünne (DE); Overmeyer, Bernward, Dipl,-Ing., 49497 Mettingen (DE)

(56) Entgegenhaltungen:
- EP-A- 1 247 440
- DE-B3- 10 254 082
- DE-C1- 10 135 128
- DE-C1- 19 947 288

## Beschreibung

Die Erfindung bezieht sich auf ein Erntegerät zum Ernten von Mais oder dergleichen stängelartigem Erntegut in einer Ausbildung nach dem Oberbegriff des Anspruches 1. Ein derartiges insbesondere als Vorsatzgerät für einen Feldhäcksler vorgesehenes Erntegerät dient zum Aufnehmen, Abschneiden und dem Überführen von beispielsweise Maispflanzen an eine Weiterverarbeitungsvorrichtung.

Aus der DE 101 35 128 C1 ist ein Erntegerät der eingangs genannten Art bekannt, bei der in der Schneidebene des Endlosförderers als hakenförmige Messer ausgebildete Schneidmittel vorgesehen sind, die mit einem Schneidmesser zusammenwirken, welches unmittelbar unter dem Endlosförderer fest an ein Rahmenteil angebracht ist, wobei es einteilig oder mehrteilig aus Messersegmenten ausgeführt sein kann. Die den Schneid- und Haltemitteln zugewandte Vorderseite des Endlosförderers ist dabei im wesentlichen geschlossen ausgebildet, wobei zur Unterstützung des Endlosförderers bei der Zuführung des stängelartigen Erntegutes an eine Weiterverarbeitungsvorrichtung Blatt- und Pflanzenheber vorgesehen sind, welche im wesentlichen aus einer pyramidenförmigen Teilerspitze und einem Führungsbügel bestehen, die durch eine Halterung ebenfalls am Rahmen des Endlosförderers befestigt sind. Die Haltemittel verlaufen dabei in etwa parallel zur Fahrtrichtung von der Teilerspitze, welche sich funktionsbedingt vor dem Endlosförderer befinden, unterhalb der Schneidebene des Endlosförderers hindurch zu dessen Rahmen.
Bei derartigen Erntegeräten kann es unter bestimmten Betriebszuständen zu Ansammlungen von Erntegut und Erntegutresten im Bereich der Blatt- und Pflanzenheber, insbesondere im Bereich der Halterung unterhalb der Schneidebene kommen, wodurch im Extremfall in diesem Bereich das Abschneiden und Aufnehmen weiterer Erntegutpflanzen durch den Endlosförderer verhindert wird. Zur Lösung dieses Problems offenbart die DE 101 35 128 C1 deshalb zur Optimierung der Erntegutaufnahme eine unterhalb der Schneidmittel des Endlosförderers vorgesehene Reinigungseinrichtung.

Diese als in Rotationsbewegung versetzbare Förderschnecke ausgebildete Reinigungseinrichtung bewirkt eine Verhinderung und Beseitigung von Ablagerungen von Erntegut und Erntegutresten insbesondere an Teilen der Blatt- und Pflanzenheber. Das erfindungsgemäße Erntegerät arbeitet somit zwar durchaus zufriedenstellend, jedoch verursacht eine derartige Reinigungseinrichtung einen erheblichen baulichen Mehraufwand für das Erntegerät, welcher sich besonders nachteilig durch ein erhöhtes Maschinengewicht, höhere erforderliche Antriebsleistungen und höheren Erstellungskosten auswirkt.

Eine weitere Lösung des zuvor beschriebenen Problems wird durch die Patentschrift DE 102 54 082 B3 offenbart. Wesentlicher Vorteil des darin beschriebenen Erntegerätes ist eine Reinigungseinrichtung, welche gleichzeitig zusätzliche Funktionen übernimmt. Jeweils im Bereich eines Blatt- und Pflanzenhebers angeordnete rotierend angetriebene Schneid- und Räumscheiben verhindern wirksam Ablagerungen von Erntegut und Erntegutresten in diesem Bereich bzw. beseitigen diese und trennen gleichzeitig die hier einlaufenden Erntegutstängel sicher ab.
Da jedoch auch diese Lösung nur durch zusätzliche separat angetriebene Maschinenteile realisierbar ist, treffen die bereits zuvor genannten Nachteile auch auf das Erntegerät nach der DE 102 54 082 B3 zu.

Der Erfindung liegt daher die Aufgabe zugrunde, ein Erntegerät der eingangs genannten Art unter Vermeidung der beschriebenen Nachteile des Standes der Technik dahingehend weiter zu optimieren, dass möglichst unter allen Betriebszuständen funktionsbeeinträchtigende Verunreinigungen und Ansammlungen von Erntegut und Erntegutresten vermieden werden.

Zur Lösung dieser Aufgabe zeichnet sich das Erntegerät der eingangs genannten Art durch die im kennzeichnenden Teil des Anspruchs 1 angegebenen Merkmale aus. Hinsichtlich weiterer vorteilhafter Merkmale wird auf die weiteren Ansprüche verwiesen.

Wesentlicher Vorteil des Erntegerätes nach der vorliegenden Erfindung ist, dass die dem Erntegerät jeweils im Bereich eines Blatt- und Pflanzenhebers hinzugefügten Mittel zur Verhinderung bzw. Beseitigung von Ablagerungen von Erntegut und Erntegutresten an Teilen der Blatt- und Pflanzenheber keinen aktiven Antrieb benötigen.

Insbesondere an den Haltern der Blatt- und Pflanzenheber lagern sich unter ungünstigen Bedingungen Pflanzenteile ab bzw. hängen sich faserige Pflanzenteile auf, die nicht vom Erntegutstrom erfasst und beseitigt werden. Dieser kritische Bereich der Halter unterhalb der umlaufenden Halte- und Schneidmittel des Endlosförderers wird nun erfindungsgemäß mit einer Rolle, welche wie eine Hülse über den Halter der Blatt-und Pflanzenteiler geschoben wird, abgedeckt. Diese Hülse kann dabei eine zylindrische, kegelförmige oder auch profilierte Form aufweisen Vorteilhaft ist der Halter in diesem Bereich derart ausgebildet, dass er gleichzeitig als Achse zur Lagerung der Rolle dient.
Da die Blatt- und Pflanzenteiler dem Endlosförderer in Erntefahrtrichtung vorgeordnet sind und mittels der Halter am Rahmen des Endlosförderers befestigt sind, verläuft die Mittelachse der Halter zwangsläufig und vorteilhaft im Bereich unterhalb des Endlosförderers zumindest annähernd vertikal ausgerichtet und rechtwinklig zur Umlaufrichtung des Endlosförderers. In einer besonders vorteilhaften Ausgestaltung der Erfindung treiben Teile des umlaufenden Endlosförderers durch ihren Kontakt mit der Reinigungsrolle auf dem Halter der Blatt- und Pflanzenteiler diese Rolle während ihre Umlaufbewegung an, ohne die Notwendigkeit von zusätzlichen Antriebsmitteln. So wird mit sehr einfachen Mitteln eine Reinigungseinrichtung für diesen kritischen Bereich bereitgestellt, welche wirkungsvoll verhindert, dass sich Erntegut und Erntegutreste ablagern.
Sollten sich auf der Rolle dennoch Erntegutteile festsetzen oder aufhängen, so werden diese durch einen vorzugsweise feststehenden Abstreifer, welcher die Rolle auf ihrer ganzen Länge überstreicht ebenfalls entfernt. Der Abstreifer ist dabei der Kontur der Rolle genau angepasst und liegt möglichst dicht an dieser an ohne dabei eine Staukante zu bilden.
In einer bevorzugten Ausführungsform eines Endlosförderers umfasst dieser nach außen weisende Schneid- und Haltemittel, wobei hakenförmige Messer als Schneidmittel eine untere Schneidebene und die darüber angeordneten Haltemittel zwei Halteebenen bilden. Erfindungsgemäß sind die Reinigungsrollen auf den Haltern der Blatt- und Pflanzenheber derart angeordnet, dass die Messer des Endlosförderers auf diesen aufliegen und im Betrieb durch ihre Umlaufbewegung in Drehung versetzen, wodurch die bereits beschriebenen vorteilhaften Wirkungen erzielt werden.
Wird in einer möglichen Ausführungsform die Schneidebene des Endlosförderers durch die umlaufenden Schneidmittel in Verbindung mit darunter angeordneten festen Messern als Gegenmesser gebildet, ergibt sich im Bereich jeder Reinigungsrolle durch die Unterbrechung der sonst durchgehenden festen Messerebene eine weitere Reinigungswirkung. Auf den Hakenmessern festsitzende Erntegutreste werden durch die Walzwirkung der Rollen regelrecht abgequetscht und zusätzlich durch die nach der Rolle folgende Stufe der Schneidenunterbrechung abgeschabt.
Des weiteren werden wesentlich verbesserte Reinigungseigenschaften im Bereich der Schneidebene dadurch erzielt, dass untere Enden von Erntegutresten, die zwischen den Förder- und Führungselementen und dem Schneidmesser eingeklemmt sind, beim Überfahren der Unterbrechung der Schneidebene freigegeben werden und entweder abgeschnitten werden oder durch den Kontakt mit der Rolle entfernt werden.
Zur Verstärkung der Reinigungswirkung währe auch eine Ausführungsform mit angetriebenen Reinigungsrollen denkbar, welche beispielsweise durch eine formschlüssige Verbindung in der Art einer Verzahnung mit dem umlaufenden Endlosförderer an dessen Unterseite aktiv angetrieben werden. Ebenso währe aber auch ein kraftschlüssiger Antrieb über ein Reibrad oder aber ein eigenständiger, vom Endlosförderer unabhängiger Antrieb denkbar. Bei einem nicht direkt durch Reibschluss gelösten Antrieb der Rolle könnte vorteilhaft die Drehrichtung variabel ausgeführt werden. In Verbindung mit einer entsprechend Oberflächenprofilierten und/oder beschichteten Rolle könnte so als Nebeneffekt eine schärfende Wirkung für die Schneidmittel des Endlosförderers erzielt werden.
Die im begrenzten Maße erzielbare Reinigungswirkung der Schneid- und Halteelemente des Endlosförderers durch eine stufenförmige Ausbildung der Schneidsegmente des Schneidmessers der Gegenschneide wird in den Bereichen der Reinigungsrollen durch das Fehlenlassen des Schneidsegmentes erheblich verbessert. Da in diesem Bereich eventuell nur ein schmales Füllstück das Schneidsegment ersetzt, ergibt sich an dieser Stelle eine wesentlich größere Stufe und Öffnung in der Schneidebene mit der bereits beschriebenen Reinigungswirkung.
Die vorteilhafte Gestaltung der Halter der Blatt- und Pflanzenteiler insbesondere im in Arbeitsrichtung vorgeordneten Bereich der Reinigungsrollen eines Erntegerätes nach der Erfindung, hat ebenfalls eine Gutflussoptimierende Wirkung und trägt zur Verhinderung von Ablagerungen und Stauungen bei. So wird in einer Ausführungsform beispielsweise vorgeschlagen diesen Bereich derart kegelförmig auszubilden, dass dadurch die Stirnseite der Rolle komplett abgedeckt wird. Einlaufende Pflanzenstängel werden durch den Kegel mit nach vorne weisender Spitze abgewiesen und somit die Rolle geschützt.

Ein Erntegerät mit den zuvor beschriebenen erfindungsgemäßen Merkmalen stellt zum bisherigen Stand der Technik eine wesentliche Verbesserung insbesondere bezüglich Gewicht, Antriebsleistung und Erstellungskosten bei gleichzeitig optimiertem Erntegutfluss dar. Durch Einsatz minimaler erfindungsgemäßer Mittel wird eine besonders wirtschaftliche Lösung des gestellten Problems bereitgestellt.

Weitere Einzelheiten und Vorteile der Erfindung gehen aus der folgenden, detaillierten Beschreibung eines möglichen Ausführungsbeispieles hervor. In der Zeichnung stellen im einzelnen dar:
- **Fig.1**: eine perspektivische Ansicht eines Ausführungsbeispieles eines erfindungsgemäßen Erntegerätes mit zwei Einzugs- und Fördereinrichtungen, die spiegelbildlich zueinander ausgebildet sind;
- **Fig.2**: eine vergrößerte, teilweise abgebrochene Darstellung der Einzelheit X aus Fig. 1 ;

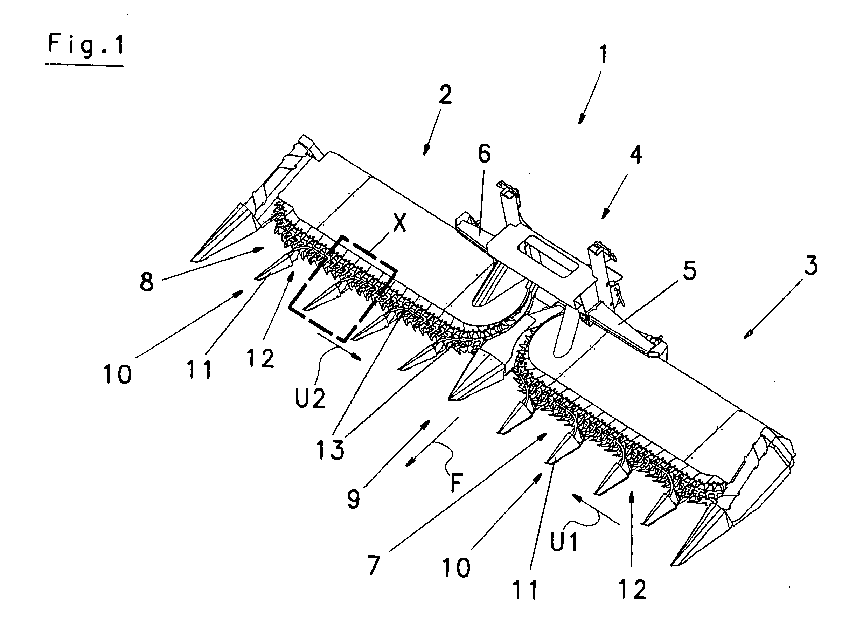

Das in Fig. 1 dargestellte Ausführungsbeispiel eines nach den Erfindungsmerkmalen gestalteten Erntegerätes 1 kann als Vorsatzgerät für eine mobile Verarbeitungseinrichtung in der Art eines Häckslers zum reihenunabhängigen Ernten von stängelartigem Erntegut wie Mais oder dergleichen eingesetzt werden. Das Erntegerät 1 besteht aus zumindest einer, vorzugsweise jedoch wie beim dargestellten Ausführungsbeispiel aus zwei in der längsten Ausrichtung quer zur Fahrt- und Arbeitsrichtung F ausgerichteten, zueinander spiegelbildlich ausgeführten Schneid- und Fördereinrichtungen 2,3, die so nebeneinander angeordnet sind, dass ein durchgehender Erntegutstreifen mit großer Arbeitsbreite abgeerntet werden kann. Zur Kopplung des Erntegerätes 1 an einen Feldhäcksler ist ein Tragrahmen 4 vorgesehen, der schwenkbar angelenkte Tragarme 5,6 umfasst. Mit Hilfe dieser Tragarme 5,6 können die Schneid- und Fördereinrichtungen 2,3 aus der in Fig. 1 dargestellten Arbeits- und Betriebsstellung in eine Transportstellung überführt werden, in der sie eine etwa vertikal ausgerichtete, hochgeklappte Stellung mit einer geringen Transportbreite einnehmen.
Andere Ausführungsformen auch mit drei oder mehr Schneid- und Fördereinrichtungen und andere Transportstellungen, beispielsweise mit horizontal übereinander geschichteten Schneid- und Fördereinrichtungen sind ebenfalls denkbar.

Das Erntegerät 1 hat in dem gezeigten Ausführungsbeispiel für jede Schneid- und Fördereinrichtung 2,3 jeweils einen umlaufenden Endlosförderer 7,8, welcher nahe einem Zuführungsbereich 9 des jeweiligen Endlosförderers 7,8 von der Weiterverarbeitungseinrichtung, etwa einem Häcksler, antreibbar ist. Die Förderrichtungen U1, U2 der Endlosförderer 7,8 verlaufen in etwa quer zur Fahrt- und Arbeitsrichtung F und sind zur Mitte des Erntegerätes 1 hin gerichtet.
Wie weiterhin den Fig. 1 zu entnehmen ist, weist jede Schneid- und Fördereinrichtung 2,3 zum einen zur Erleichterung der Ernte von liegendem oder teilweise liegendem stängelartigem Erntegut und zum anderen als Unterstützung der Endlosförderer 7,8 bei der Zuführung des stängelartigen Erntegutes an die Verarbeitungseinrichtung Blatt- und Pflanzenheber 10 auf, welche im wesentlichen aus einer etwa pyramidenförmigen Teilerspitze 11, einer Halterung 12 und einem Führungsbügel 13 bestehen. Die Anzahl der Blatt- und Pflanzenheber kann dabei variieren, insbesondere in Abhängigkeit von der Arbeitsbreite des Erntegerätes.

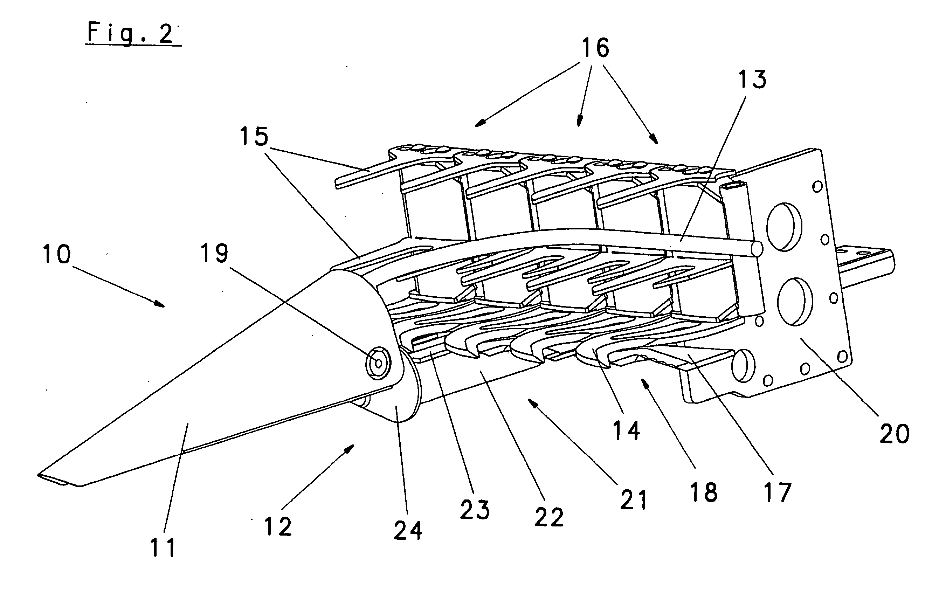

Wie insbesondere aus der Detailansicht der Fig. 2 näher hervorgeht, bestehen die Endlosförderer 7,8 im wesentlichen aus einer Vielzahl aneinandergereihter mit Schneidmitteln 14 und Haltemitteln 15 bestückten Förder- und Führungsgliedern 16, welche ein flexibles Fördersystem darstellen, das entlang unterschiedlicher Bewegungsbahnen geführt sein kann. Im dargestellten Ausführungsbeispiel werden die Förder- und Führungsglieder 16 der Endlosförderer 7,8 im Arbeitstrumm entlang einer geradlinig ausgeführten Bewegungsbahn geführt. Zudem sind Schneidmesser 17 vorgesehen, die unterhalb dieser Bewegungsbahn in Verbindung mit den Schneidmitteln 14 des Endlosförderers 7, 8 eine Schneidebene 18 bilden. Die als Gegenmesser zu den Schneidmitteln 14 wirkenden Schneidmesser sind vorteilhaft als kurze stufenartige Einzelsegmente und leicht auswechselbar gestaltet, wodurch zum einen ein Selbstreinigungseffekt und zum anderen ein wirtschaftlicher Austausch im Ersatzfall gegeben ist. Weiterhin ist in der Figur 2 sehr gut einer der den Endlosförderern 7, 8 vorgelagerten Blatt- und Pflanzenheber 10 mit seinen Einzelteilen erkennbar. Die konisch ausgeformte Teilerspitze 11 ist im Ausführungsbeispiel um die Achse 19 höhenbeweglich gelagert und gehaltert. Die Achse 19 bildet dabei ein Teil der Halterung 12, über die die Teilerspitze 11 am Grundrahmen 20 der Schneid- und Fördereinrichtung 2, 3 befestigt ist. Der Führungsbügel 13 ist im nicht sichtbaren Bereich unterhalb der Teilerspitze 11 starr mit der Halterung 12 verbunden. Je nach Positionierung an der Schneid- und Fördereinrichtung 2, 3 ist der Führungsbügel dieser entsprechend angepasst ausgeformt.

Die erfindungsgemäße Reinigungseinrichtung 21 zur Verhinderung und Beseitigung von Ablagerungen von Erntegut und Erntegutresten an Teilen des Blatt- und Pflanzenhebers 10, ist in der Ansicht der Fig. 2 ebenfalls deutlich zu erkennen. Hauptteil der Reinigungseinrichtung 21 ist dabei die Rolle 22, welche die Halterung 12 des Blatt- und Pflanzenhebers 10 als Achse nutzt. Die Rolle 22 ist in der Ausrichtung und Höhe derart angeordnet, dass die umlaufenden hakenförmigen Schneidmittel 14 des Endlosförderers 7, 8 diese berührend überlaufen und somit in Drehung versetzen. Dieser Effekt verhindert wirkungsvoll Erntegutansammlungen in diesem ansonsten kritischen Bereich. Der Abstreifer 23 entfernt auch feinste Anhaftungen von der Rolle 22 die dann ebenfalls durch die Nähe des Abstreifers 23 zu den umlaufenden Schneidmitteln14 von diesen mitgenommen und dem Erntegutfluss zugeführt werden.
Die konische Abdeckung 24 schützt die Stirnseite der Rolle 22 und verhindert dort Erntegutanhaftungen. Die Abdeckung 24 ist feststehender Bestandteil der Halterung 12 und könnte bei anderen Ausführungsbeispielen auch eine ganz andere Form aufweisen. Direkt im Bereich der Rolle 22 ist die Schneidebene 18 durch das Fehlenlassen eines Schneidmessers 17 oder zumindest eines Teiles unterbrochen, damit die Rolle 22 direkt im Kontakt zu den Schneidmitteln 14 steht.

Die erfindungsgemäße Ausführungsform eines Erntegerätes 1, wie sie in den Fig. 1 und 2 dargestellt ist stellt eine besonders wirtschaftliche Lösung zur Verhinderung und Beseitigung von Ablagerungen von Erntegut und Erntegutresten an Teilen des Blatt-und Pflanzenhebers 10 dar. Vorhandene Halterungen 12 werden gleichzeitig als Bestandteil der Reinigungseinrichtung 21 genutzt. Betriebsnotwendige Antriebe und Bewegungen werden gleichzeitig zum Antrieb der Reinigungseinrichtung 21 genutzt. Durch die Erfindung wird mit minimalem Materialeinsatz ein optimiertes Erntegerät 1 mit einer wirkungsvolle Reinigungseinrichtung 21 bereitgestellt.

## Patentansprüche

1. Erntegerät (1) zum Ernten von Mais oder dergleichen stängelartigem Erntegut, wobei das Erntegerät (1) zumindest eine Schneid- und Fördereinrichtung (2,3) mit einem Endlosförderer (7,8) aufweist, welcher an zumindest einem endlos umlaufenden Zugmittel nach außen weisende Schneidmittel (14) und Haltemittel (15) umfasst, wobei die Schneidmittel (14) eine Schneidebene (18) und die Haltemittel (15) zumindest eine oberhalb der Schneidebene angeordnete Halteebene zur Zuführung von aufgenommenem Erntegut an eine Weiterverarbeitungsmaschine, insbesondere einen Häcksler ausbilden und dem Endlosförderer (7,8) zumindest ein Blatt- und Pflanzenheber (10) zur Unterstützung der Zuführung des stängelartigen Ernteguts zugeordnet ist und die Förder- und Schneideinrichtung eine Reinigungseinrichtung (21) zur Verhinderung und Beseitigung von Ablagerungen von Erntegut und Erntegutresten an Teilen des Blatt- und Pflanzenhebers (10), insbesondere seiner Halterung (12) umfasst, welche unterhalb der Schneidebene (18) der Schneid- und Fördereinrichtung (2,3) angeordnet ist, **dadurch gekennzeichnet, dass** Teile der Reinigungseinrichtung (21) die Haltemittel (12) des Blatt- und Pflanzenhebers (10) zumindest bereichsweise umschließen.

2. Erntegerät nach Anspruch 1, **dadurch gekennzeichnet, dass** Teile der Reinigungseinrichtung (21) die Halterung (12) des Blatt- und Pflanzenhebers (10) zumindest im Bereich unterhalb der umlaufenden Schneidmittel (14) des Endlosförderers (7,8) umschließen.

3. Erntegerät nach Anspruch 1 oder 2, **dadurch gekennzeichnet, dass** Teile der Reinigungseinrichtung (21) die Halterung (12) des Blatt- und Pflanzenhebers (10) zumindest bereichsweise rotationsbeweglich umschließen.

4. Erntegerät (1) nach einem oder mehreren der vorstehenden Ansprüche, **dadurch gekennzeichnet, dass** die Teile der Reinigungseinrichtung (21), welche die Halterung (12) des Blatt- und Pflanzenhebers (10) zumindest bereichsweise rotationsbeweglich umschließen als Rolle (22) ausgebildet sind.

5. Erntegerät (1) nach einem oder mehreren der vorstehenden Ansprüche, **dadurch gekennzeichnet, dass** die Rolle (22) der Reinigungseinrichtung (21) auf der Halterung (12) des Blatt- und Pflanzenhebers (10) frei drehbar gelagert ist.

6. Erntegerät (1) nach einem oder mehreren der vorstehenden Ansprüche, **dadurch gekennzeichnet, dass** die Rolle (22) der Reinigungseinrichtung (21) auf der Halterung (12) des Blatt- und Pflanzenhebers (10) antreibbar gelagert ist.

7. Erntegerät (1) nach einem oder mehreren der vorstehenden Ansprüche, **dadurch gekennzeichnet, dass** die Rolle (22) der Reinigungseinrichtung (21) auf der Halterung (12) des Blatt- und Pflanzenhebers (10) über eine formschlüssige Antriebsverbindung antreibbar gelagert ist.

8. Erntegerät (1) nach einem oder mehreren der vorstehenden Ansprüche, **dadurch gekennzeichnet, dass** die Rolle (22) der Reinigungseinrichtung (21) auf der Halterung (12) des Blatt- und Pflanzenhebers (10) über eine kraftschlüssige Antriebsverbindung antreibbar gelagert ist.

9. Erntegerät (1) nach einem oder mehreren der vorstehenden Ansprüche, **dadurch gekennzeichnet, dass** die Rolle (22) der Reinigungseinrichtung (21) auf der Halterung (12) des Blatt- und Pflanzenhebers (10) durch Reibschluss mit den umlaufenden Schneidmitteln (14) des Endlosförderers (7,8) antreibbar ist.

10. Erntegerät (1) nach einem oder mehreren der vorstehenden Ansprüche, **dadurch gekennzeichnet, dass** die Rolle (22) der Reinigungseinrichtung (21) in beliebiger Drehrichtung antreibbar ist

11. Erntegerät (1) nach Anspruch 3, **dadurch gekennzeichnet, dass** die Rotationsachse der Teile der Reinigungseinrichtung (21), welche die Halterung (12) des Blatt- und Pflanzenhebers (10) zumindest bereichsweise rotationsbeweglich umschließen, zumindest annähernd senkrecht und in einer zumindest annähernd parallelen Ebene zur Bewegungsrichtung (U1, U2) der umlaufenden Schneidmittel (14) des Endlosförderers (7,8) ausgerichtet ist.

12. Erntegerät (1) nach einem oder mehreren der vorstehenden Ansprüche, **dadurch gekennzeichnet, dass** die zumindest annähernd in Arbeitsrichtung (F) des Erntegerätes (1) ausgerichtete Stirnseite der Rolle (22) der Reinigungseinrichtung (21) auf der Halterung (12) des Blatt- und Pflanzenhebers (10) von Teilen des Blatt- und Pflanzenhebers (10) und/oder dessen Halterung (12) abgedeckt ist.

13. Erntegerät (1) nach einem oder mehreren der vorstehenden Ansprüche, **dadurch gekennzeichnet, dass** der Rolle (22) der Reinigungseinrichtung (21) ein Abstreifer (23) zugeordnet ist, welcher der Oberflächenkontur der Rolle (22) angepasst ist.

14. Erntegerät (1) nach einem oder mehreren der vorstehenden Ansprüche, **dadurch gekennzeichnet, dass** die Rolle (22) der Reinigungseinrichtung (21) zumindest an der Oberfläche eine Härte aufweist, welche unterhalb der Oberflächenhärte der Schneidmittel (14) liegt.

15. Erntegerät (1) nach einem oder mehreren der vorstehenden Ansprüche, **dadurch gekennzeichnet, dass** die Rolle (22) der Reinigungseinrichtung (21) eine Oberflächenbeschaffenheit aufweist, welche auf die Schneidmittel (14) bei Kontakt mit der Rolle (22) eine schärfende Wirkung ausübt.

16. Erntegerät (1) nach einem oder mehreren der vorstehenden Ansprüche, **dadurch gekennzeichnet, dass** die Rolle (22) der Reinigungseinrichtung (21) eine profilierte Oberfläche aufweist.

## Claims

1. Harvesting device (1) for harvesting maize or the like stalked crops for harvesting, the harvesting device (1) having at least one cutting and feeding arrangement (2, 3) having a continuous feeder (7, 8) which comprises cutting means (14) and holding means (15) which point outwards on at least one continuously circulating tractive means, the cutting means (14) defining a plane of cut (18) and the holding means (15) defining at least one holding plane which is arranged above the plane of cut, for the infeed of crops for harvesting which are picked up to a mechanical device for further processing and in particular to a chopper, and the continuous feeder (7, 8) having associated with it at least one leaf and plant lifter (10) to assist the infeed of the stalked crops for harvesting, and the cutting and feeding arrangement comprising a cleaning arrangement (21) for preventing and removing deposits of crops for harvesting and of remnants of the crops for harvesting on parts of the leaf and plant lifter (10), and in particular on the mounting (12) of the latter which is arranged below the plane of cut (18) of the cutting and feeding arrangement (2, 3), **characterized in that** parts of the cleaning arrangement (21) surround the mounting means (12) of the plant and leaf lifter (10) at least in a region or regions.

2. Harvesting device according to claim 1, **characterised in that** parts of the cleaning arrangement (21) surround the mounting (12) of the plant and leaf lifter (10) at least in the region below the circulating cutting means (14) of the continuous feeder (7, 8).

3. Harvesting device according to claim 1 or 2, **characterised in that** parts of the cleaning arrangement (21) surround the mounting (12) of the leaf and plant lifter (10), at least in a region or regions, in such a way as to be movable in rotation.

4. Harvesting device (1) according to one or more of the foregoing claims, **characterised in that** the parts of the cleaning arrangement (21) which surround the mounting (12) of the leaf and plant lifter (10), at least in a region or regions, in such a way as to be movable in rotation take the form of a roller (22).

5. Harvesting device (1) according to one or more of the foregoing claims, **characterised in that** the roller (22) of the cleaning arrangement (21) is mounted on the mounting (12) of the leaf and plant lifter (10) in such a way as to be freely rotatable.

6. Harvesting device (1) according to one or more of the foregoing claims, **characterised in that** the roller (22) of the cleaning arrangement (21) is mounted on the mounting (12) of the leaf and plant lifter (10) in such a way as to be drivable.

7. Harvesting device (1) according to one or more of the foregoing claims, **characterised in that** the roller (22) of the cleaning arrangement (21) is mounted on the mounting (12) of the leaf and plant lifter (10) in such a way as to be drivable via a positively interengaged driving connection.

8. Harvesting device (1) according to one or more of the foregoing claims, **characterised in that** the roller (22) of the cleaning arrangement (21) is mounted on the mounting (12) of the leaf and plant lifter (10) in such a way as to be drivable via a frictionally engaged driving connection.

9. Harvesting device (1) according to one or more of the foregoing claims, **characterised in that** the roller (22) of the cleaning arrangement (21) can be driven on the mounting (12) of the leaf and plant lifter (10) by frictional engagement with the circulating cutting means (14) of the continuous feeder (7, 8).

10. Harvesting device (1) according to one or more of the foregoing claims, **characterised in that** the roller (22) of the cleaning arrangement (21) can be driven in whichever direction of rotation is desired.

11. Harvesting device (1) according to claim 3, **characterised in that** each axis of rotation of those parts of the cleaning arrangement (21) which surround the mounting (12) of the leaf and plant lifter (10), at least in a region or regions, in such as way as to be movable in rotation is aligned at least approximately perpendicularly to, and in a plane which is at least approximately parallel to, the direction of movement (U1, U2) of the circulating cutting means (14) of the continuous feeder (7, 8).

12. Harvesting device (1) according to one or more of the foregoing claims, **characterised in that that** end-face of the roller (22) of the cleaning arrangement (21) which is oriented at least approximately in the direction of working (F) of the harvesting device (1) is covered, on the mounting (12) of the leaf and plant lifter (10), by parts of the leaf and plant lifter (10) and/or of the mounting (12) thereof.

13. Harvesting device (1) according to one or more of the foregoing claims, **characterised in that** the roller (22) of the cleaning arrangement (21) has associated with it a wiper (23) which is matched to the surface contour of the roller (22).

14. Harvesting device (1) according to one or more of the foregoing claims, **characterised in that**, at least at the surface, the roller (22) of the cleaning arrangement (21) is of a hardness which is less than the surface hardness of the cutting means (14).

15. Harvesting device (1) according to one or more of the foregoing claims, **characterised in that** the nature of the surface of the roller (22) of the cleaning arrangement (21) is such that it has a sharpening effect on the cutting means (14) when they are in contact with the roller (22).

16. Harvesting device (1) according to one or more of the foregoing claims, **characterised in that** the roller (22) of the cleaning arrangement (21) has a profiled surface.

## Revendications

1. Appareil de récolte (1) pour récolter du maïs ou des produits agricoles à tiges, semblables,
l'appareil de récolte (1) comportant au moins une installation de coupe et de transfert (2, 3) comprenant un convoyeur sans fin (7, 8) dont au moins un moyen de traction sans fin, tournant, est muni de moyens de coupe (14) dirigés vers l'extérieur et de moyens de retenue (15),
les moyens de coupe (14) formant un plan de coupe (18) et les moyens de retenue (15) formant un plan de retenue situé au moins au-dessus du plan de coupe pour fournir les produits de récolte, reçus, à une machine de traitement en aval, notamment à un hacheur et au moins un dispositif de relevage de feuilles et de plantes (10) est associé au convoyeur sans fin (7, 8) pour soutenir l'alimentation du produit de récolte en forme de tige et l'installation de transfert et de coupe comporte une installation de nettoyage (21) pour éviter et pour éliminer les dépôts de produits et de résidus de produit sur des parties du dispositif de relevage de feuilles et de plantes (10), notamment son support (12) installé en dessous du plan de coupe (18) de l'installation de coupe et de transfert (2, 3),
**caractérisé en ce que**
des parties de l'installation de nettoyage (21) entourent au moins partiellement le support (12) du dispositif de relevage de feuilles et de plantes (10).

2. Appareil de récolte selon la revendication 1,
**caractérisé en ce que**
les parties de l'installation de nettoyage (21) comprennent le support (12) du dispositif de relevage de feuilles et de plantes (10) au moins dans la zone située en dessous des moyens de coupe (14), en circulation du convoyeur sans fin (7, 8).

3. Appareil de récolte selon la revendication 1 ou 2,
**caractérisé en ce que**
les parties de l'installation de nettoyage (21) entourent au moins par zones, de manière mobile en rotation, le support (12) du dispositif de relevage de feuilles et de plantes (10).

4. Appareil de récolte selon l'une des revendications précédentes,
**caractérisé en ce que**
les parties de l'installation de nettoyage (21) qui entourent au moins par zones de manière mobile en rotation le support (12) du dispositif de relevage de feuilles et de plantes (10), sont réalisées sous la forme d'un rouleau (22).

5. Appareil de récolte selon l'une des revendications précédentes,
**caractérisé en ce que**
le rouleau (22) de l'installation de nettoyage (21), est monté libre en rotation sur le support (12) du dispositif de relevage de feuilles et de plantes (10).

6. Appareil de récolte selon l'une des revendications précédentes,
**caractérisé en ce que**
le rouleau (22) de l'installation de nettoyage (21), est monté de manière à être entraîné sur le support (12) du dispositif de relevage de feuilles et de plantes (10).

7. Appareil de récolte selon l'une des revendications précédentes,
**caractérisé en ce que**
le rouleau (22) de l'installation de nettoyage (21), est monté de manière a être entraîné sur le support (12) du dispositif de relevage de feuilles et de plantes (10) par une liaison d'entraînement par la forme.

8. Appareil de récolte selon l'une des revendications précédentes,
**caractérisé en ce que**
le rouleau (22) de l'installation de nettoyage (21), est monté de manière à être entraîné sur le support (12) du dispositif de relevage de feuilles et de plantes (10) par l'intermédiaire d'une liaison d'entraînement par la force.

9. Appareil de récolte selon l'une des revendications précédentes,
**caractérisé en ce que**
le rouleau (22) de l'installation de nettoyage (21), est entraîné sur le support (12) du dispositif de relevage de feuilles et de plantes (10), par une liaison par friction avec les moyens de coupe (14) en circulation du convoyeur sans fin (7, 8).

10. Appareil de récolte selon l'une des revendications précédentes,
**caractérisé en ce que**
le rouleau (22) de l'installation de nettoyage (21) peut être entraîné dans un sens de rotation quelconque.

11. Appareil de récolte selon la revendication 3,
**caractérisé en ce que**
l'axe de rotation des parties de l'installation de nettoyage (21) qui entourent le support (12) du dispositif de relevage de feuilles et de plantes (10) de manière mobile en rotation au moins par zones, est orienté au moins sensiblement verticalement et dans un plan au moins sensiblement parallèle à la direction de mouvement (U1, U2) des moyens de coupe (14) en circulation du convoyeur sans fin (7, 8).

12. Appareil de récolte selon l'une des revendications précédentes,
**caractérisé en ce que**
la face frontale du rouleau (22) de l'installation de nettoyage (21), alignée au moins sensiblement dans la direction de travail (F) de l'appareil de récolte (1), est couverte sur le support (12) du dispositif de relevage de feuilles et de plantes (10) par des parties du dispositif de relevage de feuilles et de plantes (10) et/ou au moins son support (12).

13. Appareil de récolte selon l'une des revendications précédentes,
**caractérisé en ce que**
le rouleau (22) de l'installation de nettoyage (21) est équipé d'une raclette (23) adaptée au contour extérieur du rouleau (22).

14. Appareil de récolte selon l'une des revendications précédentes,
**caractérisé en ce que**
le rouleau (22) de l'installation de nettoyage (21), a au moins une surface extérieure avec une dureté inférieure à la dureté de surface du moyen de coupe (14).

15. Appareil de récolte selon l'une des revendications précédentes,
**caractérisé en ce que**
le rouleau (22) de l'installation de nettoyage (21), présente une caractéristique de surface qui exerce un effet d'affûtage sur l'arête de coupe (14) en contact avec le rouleau (22).

16. Appareil de récolte selon l'une des revendications précédentes,
**caractérisé en ce que**
le rouleau (22) de l'installation de nettoyage (21), a une surface extérieure profilée.
